# EUROPEAN PATENT APPLICATION

(11) **EP 4 703 224 A1**
(43) Date of publication of application: **04.03.2026**
(21) Application number: 24796739.1
(22) Date of filing: 04.04.2024
(51) Int. Cl.: B60W 30/06, B60W 40/02

(54) **PARKING SUPPORT SYSTEM**

(30) Priority: 28.04.2023 JP 2023074544
(71) Applicant: AISIN CORPORATION, Kariya-shi, Aichi 448-8650 (JP)
(72) Inventor: IWAZAWA, Kazuma, Kariya-shi, Aichi 448-8650 (JP)
(74) Representative: TBK
(86) International application number: PCT/JP2024/013953
(87) International publication number: WO 2024/224981

(57) **Abstract**

A parking support system includes: a space recognition part configured to recognize a travel space (M) and a parking space (P); a breadth determination part configured to determine at least one of a width (B1) of an entrance (E) and a length (B2), of the travel space (M), in a direction orthogonal to the width (B 1) of the entrance (E), as a movement space breadth (B); and a vehicle control part configured to perform parking control through which a vehicle (50) is moved into and stopped in the parking space (P), on the basis of relative positions of the parking space (P) and the travel space (M) with respect to the vehicle (50). The vehicle control part is configured to apply, in a case in which the movement space breadth (B) is determined to be narrower than a determination criterion, a narrow environment setting that is a control setting for a narrow environment to increase positional accuracy of the vehicle (50) by allowing increased motion of the vehicle (50), as compared with a case in which the movement space breadth (B) is determined to be a breadth of the determination criterion or more.

## Description

### TECHNICAL FIELD

The present invention relates to a parking support system that performs control, on a vehicle, through which the vehicle is parked into a parking space for the vehicle.

### BACKGROUND ART

The background art will be described below.

JP 2019-137364 A (Patent Literature 1) discloses a parking support system that performs control, on a vehicle, through which the vehicle is parked into a parking space. For example, this system includes a detection part that detects presence or absence of an occupant riding in the vehicle. In a case in which the presence of the occupant is detected, the system causes a type of a parameter related to traveling of the vehicle to be changed to a parameter that contributes to improvement of ride comfort of the occupant. In a case in which the absence of the occupant is detected, the system causes the type of the parameter to be changed to a parameter that contributes to improvement of positional accuracy of the vehicle with respect to a target path. That is, in a case in which the vehicle is caused to travel to a target parking position in a state in which the occupant is present in the vehicle, control that prioritizes the ride comfort is performed to improve the ride comfort of the occupant, and in a case in which the vehicle is caused to travel to the target parking position in a state in which the occupant is absent in the vehicle, control that does not prioritize the ride comfort (for example, hard braking or continuous movement and stop) is performed to perform control that prioritizes the positional accuracy of the vehicle with respect to the target path.

### CITATION LIST

### PATENT LITERATURE

Patent Literature 1: JP 2019-137364 A

### SUMMARY OF INVENTION

### TECHNICAL PROBLEMS

In the parking support system described in Patent Literature 1, consideration is made only as to whether or not an occupant is present in a vehicle, when a change is made for the content of parking control for causing the vehicle to move into and stop in a parking space.

Incidentally, in order to perform parking support appropriately, there is a case in which it is more desirable to consider a viewpoint different from the viewpoint as to whether or not an occupant is present in a vehicle. For example, it is also conceivable to change the content of parking control in accordance with a movement space breadth available for a movement path of the vehicle.

In view of the above circumstances, it is desired to obtain a parking support system that can perform parking control in which required accuracy of a parking position of a vehicle is ensured in accordance with a movement space breadth, and in which ride comfort of an occupant is also ensured as much as possible.

### SOLUTION TO PROBLEMS

A parking support system according to the present disclosure is a parking support system configured to perform control, on a vehicle, through which the vehicle in a travel space connected to a parking space is parked into the parking space, the parking support system including:
a space recognition part configured to recognize the travel space and the parking space;
a breadth determination part configured to determine at least one of a width of an entrance for the vehicle from the travel space to the parking space and a length, of the travel space, in a direction orthogonal to the width of the entrance, recognized by the space recognition part, as a movement space breadth available for a movement path of the vehicle; and
a vehicle control part configured to perform parking control through which the vehicle is moved into and stopped in the parking space, based on relative positions of the parking space and the travel space with respect to the vehicle,
in which
the vehicle control part is configured to apply, in a case in which the movement space breadth is determined to be narrower than a determination criterion by the breadth determination part, a narrow environment setting that is a control setting for a narrow environment to increase positional accuracy of the vehicle, as compared with a case in which the movement space breadth is determined to be a breadth of the determination criterion or more by the breadth determination part.

According to this configuration, the narrow environment setting is applied in a case in which the movement space breadth available for the movement path of the vehicle is narrower than the determination criterion, that is, in a case in which it is highly necessary to increase the accuracy of the position of the vehicle under the parking control in order to avoid interference with an obstacle around the vehicle. As a result, in exchange for allowing the motion of the vehicle in the parking control to increase, the positional accuracy of the vehicle in the parking control can be increased, and the interference with the obstacle around the vehicle can be appropriately avoided. In addition, according to this characteristic configuration, in a case in which the movement space breadth is the breadth of the determination criterion or more, there is no problem even if the position of the vehicle under the parking control slightly deviates. Thus, in exchange for reducing the positional accuracy of the vehicle, an increase in the motion of the vehicle can be suppressed, and the ride comfort of the occupant of the vehicle can be improved. That is, according to this configuration, it is possible to perform parking control in which required accuracy of the parking position of the vehicle is ensured in accordance with the movement space breadth, and in which ride comfort of the occupant is also ensured as much as possible.

Further features and advantages of the technique according to the present disclosure will become more apparent from the following description of exemplary and non-limiting embodiments with reference to the drawings.

### BRIEF DESCRIPTION OF DRAWINGS

FIG. 1 is an explanatory view showing an example of parking support.
FIG. 2 is an explanatory view showing an example of the parking support.
FIG. 3 is a schematic block diagram showing an example of a system configuration of a vehicle including a parking support system.
FIG. 4 is a functional block diagram of the parking support system.
FIG. 5 is an explanatory view showing an example of control setting in a phase of setting a target movement path.
FIG. 6 is an explanatory view showing an example of control setting in the phase of setting the target movement path.
FIG. 7 is an explanatory diagram showing an example of control settings in a phase of performing parking control.
FIG. 8 is a flowchart for explaining breadth determination processing.

### DESCRIPTION OF EMBODIMENTS

### [First Embodiment]

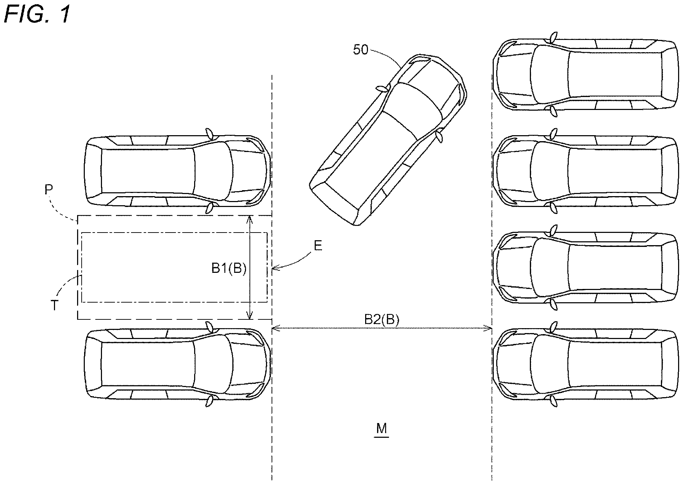

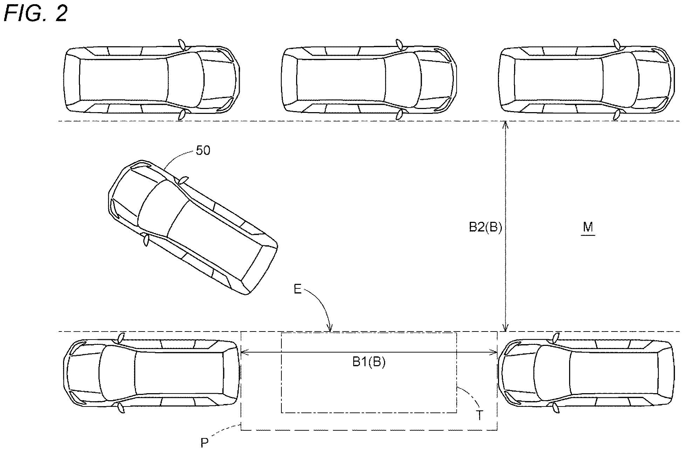

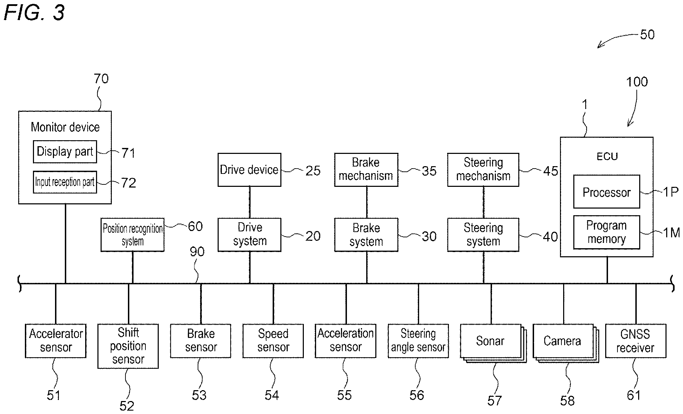

A first embodiment of a parking support system 100 will be described with reference to the drawings. The explanatory views of FIGS. 1 and 2 each exemplarily show one mode of parking support when a vehicle 50 is parked. FIG. 1 shows an example of a case in which the vehicle 50 is subjected to perpendicular parking, and FIG. 2 is an example of a case in which the vehicle 50 is subjected to parallel parking. In addition, the block diagram of FIG. 3 schematically shows an example of a system configuration of the vehicle 50 including the parking support system 100. The parking support system 100 of the present embodiment performs control, on the vehicle 50, through which the vehicle 50 in a travel space M connected to a parking space P is parked into the parking space P.

In the present embodiment, the parking support system 100 causes the vehicle 50 to be parked at a target parking position T set within an area of the parking space P through automated driving. As will be described later, the target parking position T is determined, for example, by an input reception part 72 receiving input from an occupant. Note that a mode, that is, semi-automated driving, may be adopted in which steering is manually performed by the occupant on the basis of guidance provided by the parking support system 100, and in which only driving and braking are performed through automated driving.

As shown in FIG. 3, the parking support system 100 is implemented with an electronic control unit (ECU) 1 as a core, in cooperation with other systems and various sensors. The ECU 1 includes a processor 1P such as a microcomputer, a microprocessor, or a digital signal processor (DSP), a program memory 1M in which software such as a program and a parameter is stored, and other various electronic components.

The processor 1P is hardware serving as a core of the ECU 1, and a vehicle control part 13 is implemented in cooperation with various types of hardware with the processor 1P as a core and software such as a program stored in the program memory 1M. Moreover, the parking support system 100 is implemented with the ECU 1 as a core, in cooperation with other systems such as a drive system 20, a brake system 30, a steering system 40, and a position recognition system 60, various sensors and peripheral devices denoted by reference signs "51" to "58" and "61", a monitor device 70, and the ECU 1.

Various functional parts forming the parking support system 100 will be described below, and each functional part may be implemented by a plurality of pieces of hardware or may be implemented in cooperation with at least one piece of hardware and software, and is not necessarily configured as an independent component.

The drive system 20 is a system that controls a drive device 25 that drives wheels (not shown). The drive device 25 includes, for example, an internal combustion engine, a rotary electric machine, a gear mechanism, an engagement device that connects and disconnects power transmission between rotary members, and the like, all of which are not shown. The brake system 30 is a system that causes a braking force to be applied to the wheels. The steering system 40 is a system that causes a traveling direction of the vehicle 50 to be changed by moving steered wheels of the wheels. The position recognition system 60 is a system that recognizes a position (current position) of the vehicle 50.

In addition, the vehicle 50 includes various sensors and peripheral devices, such as an accelerator sensor 51, a shift position sensor 52, a brake sensor 53, a speed sensor 54, an acceleration sensor 55, a steering angle sensor 56, sonars 57, cameras 58, and a global navigation satellite system (GNSS) receiver 61. As the GNSS receiver 61, for example, a global positioning system (GPS) receiver is used.

The accelerator sensor 51 is a sensor that detects an operation amount of an accelerator pedal operated by the occupant. The shift position sensor 52 is a sensor that detects instruction input that provides an instruction as to an operation mode of the drive device 25, such as a shift speed (including backward movement, parking, and the like) instructed with a shift lever (not shown). The brake sensor 53 is a sensor that detects an operation amount of a brake pedal operated by the occupant. The speed sensor 54 is a sensor that detects the traveling speed of the vehicle 50, that is, the rotation speed of the wheel. The acceleration sensor 55 is a sensor that detects the acceleration of the vehicle 50, and the acceleration sensor 55 of the present embodiment can also detect, for example, an inclination angle or an inclination direction of a land surface on which the vehicle 50 is located. The steering angle sensor 56 is a sensor that detects an operation amount of a steering wheel operated by the occupant, and preferably detects the operation amount as a steering angle of the vehicle 50.

The sonars 57 are installed at a plurality of locations on the vehicle 50, and each detect the presence or absence of an obstacle present around the vehicle 50. Preferably, the sonar 57 is an active sonar. Further, the obstacle sensor is not limited to the sonar 57, and a laser radar or the like may be provided as the obstacle sensor. The cameras 58 are installed at a plurality of locations on the vehicle 50, and each acquire an image around the vehicle 50. The GNSS receiver 61 receives a signal from a GNSS satellite.

In addition to the ECU 1 (parking support system 100), the drive system 20, the brake system 30, the steering system 40, the position recognition system 60, and the monitor device 70 described above, the sensors and the peripheral devices denoted by reference signs "51" to "58" and "61" are connected to each other to be able to communicate with each other via an in-vehicle network 90 such as a controller area network (CAN).

For example, the drive system 20 controls the drive device 25 in cooperation with the accelerator sensor 51, the shift position sensor 52, the brake sensor 53, the speed sensor 54, the acceleration sensor 55, the steering angle sensor 56, and the like, via the in-vehicle network 90. The brake system 30 controls a brake mechanism 35 in cooperation with the brake sensor 53, via the in-vehicle network 90. The steering system 40 controls a steering mechanism 45 including the steering wheel, the steered wheels, and the like, in cooperation with the steering angle sensor 56. The position recognition system 60 recognizes the position (current position) of the vehicle 50, on the basis of a GNSS signal received by the GNSS receiver 61. In the present embodiment, the position recognition system 60 recognizes the position (current position) of the vehicle 50, also on the basis of information or the like obtained from the speed sensor 54, the steering angle sensor 56, the camera 58, or the like, in addition to the GNSS signal.

The monitor device 70 includes a display part 71 that can display image information, text information, and the like, and the input reception part 72 that receives input of information from the occupant. The input reception part 72 includes a touch panel type switch provided on the display part 71, and a physical push button type switch and a switch such as a dial. Such a monitor device 70 may have a function of, for example, a navigation system, an audio system, or the like.

As shown in FIGS. 1 and 2, the occupant stops the vehicle 50 in a state where the vehicle 50 is slightly turned by steering in a direction opposite to the parking space P. This position can be referred to as a backward movement start position at which the vehicle 50 starts to move backward toward the parking space P. Note that although an amount of steering required at the time of movement to the target parking position T increases, the vehicle 50 may be stopped in a state of having traveled straight without being subjected to the steering in the manner described above. For example, the vehicle 50 may be stopped immediately before the parking space P on the way to traveling in the travel space M.

When causing parking control to be performed by the parking support system 100, the occupant of the vehicle 50 performs operation input to the input reception part 72, such as operation input with a parking control start button. Then, the occupant performs a touch operation within a desired parking space P in an image displayed on the display part 71, whereby this touch operation is received by the input reception part 72 as input of the target parking position T. Thereafter, the parking support system 100 performs parking control through which the vehicle 50 is moved into and stopped in the parking space P through automated driving, on the basis of relative positions of the parking space P and the travel space M with respect to the vehicle 50. Note that the mode may be implemented in which steering is manually performed by the occupant on the basis of guidance provided by the parking support system 100, and in which only driving and braking are performed through automated driving, that is, the semi-automated driving may be performed.

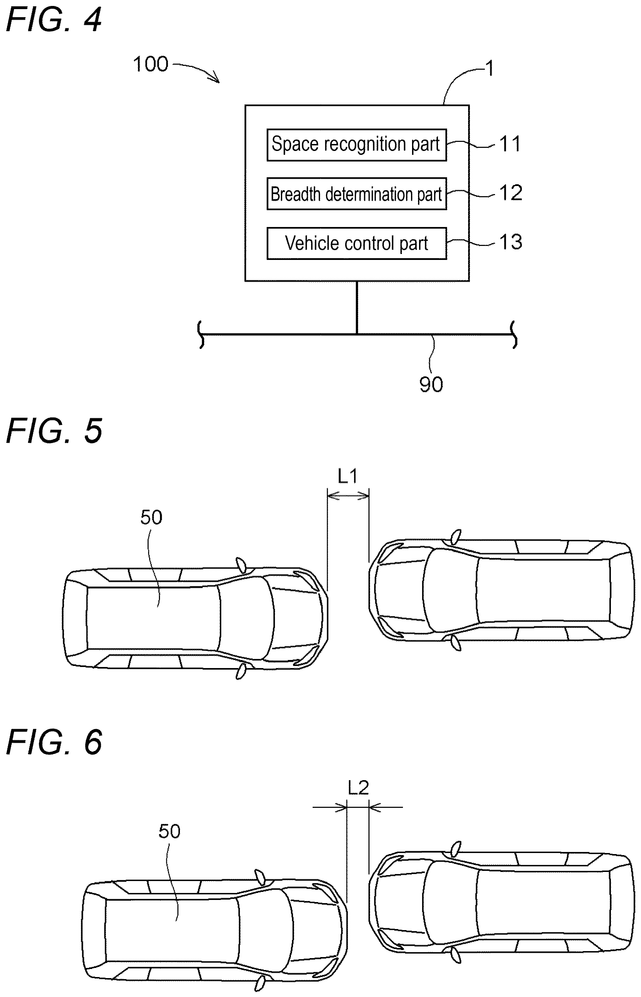

As shown in FIG. 4, the parking support system 100 (ECU 1) includes a space recognition part 11, a breadth determination part 12, and the vehicle control part 13. In each of these functional parts, a calculation part for performing various types of processing on input data is configured with hardware or software (program), or both of them. The configuration shown in FIG. 4 is shown as an exemplary and conceptual block diagram, and does not limit an actual physical configuration of the ECU 1.

The vehicle control part 13 performs, by controlling drive power and a braking force acting on the wheels, parking control through which the vehicle 50 is moved into and stopped in the parking space P, on the basis of relative positions of the parking space P and the travel space M with respect to the vehicle 50.

For example, the vehicle control part 13 is configured to set a target movement path that is a target for a movement path of the vehicle 50, and a target speed of the vehicle 50 at each position on the target movement path, on the basis of the relative positions of the parking space P and the travel space M with respect to the vehicle 50, and perform feedback control to cause an actual position and an actual speed of the vehicle 50 to approach the target movement path and the target speed, in the parking control.

The space recognition part 11 recognizes the travel space M and the parking space P. For example, the space recognition part 11 can recognize shapes of the travel space M and the parking space P in the horizontal direction by performing image recognition on an image acquired by imaging surroundings of the vehicle 50 with the camera 58. Note that the space recognition part 11 may recognize the shapes of the travel space M and the parking space P in the horizontal direction by using peripheral detection sensors (for example, light detection and ranging (LIDER), a millimeter-wave sensor, an ultrasonic sensor, and the like) different from the camera 58, or using the camera 58 and these peripheral detection sensors in combination.

The breadth determination part 12 determines at least one of a width of an entrance E for the vehicle 50 from the travel space M to the parking space P and a length, of the travel space M, in a direction orthogonal to the width of the entrance E, recognized by the space recognition part 11, as a movement space breadth B available for the movement path of the vehicle 50. FIGS. 1 and 2 shows, as the movement space breadth B, the width B1 of the entrance E and a length B2, of the travel space M, in the direction orthogonal to the width B1 of the entrance E. Then, the breadth determination part 12 determines whether or not the movement space breadth B is narrower than a predetermined determination criterion. For example, when the parking control through the parking support system 100 is performed, the breadth determination part 12 executes breadth determination processing of determining whether or not the movement space breadth B is narrower than the predetermined determination criterion, once.

As the value of the width B1 of the entrance E for the vehicle 50 to the parking space P becomes smaller (that is, the width B1 becomes narrower), an area available as the target movement path when the vehicle 50 is moved to the target parking position T becomes narrower. Similarly, as the value of the length B2, of the travel space M, in the direction orthogonal to the width B1 of the entrance E becomes smaller (that is, the length B2 becomes shorter), an area available as the target movement path when the vehicle 50 is moved to the target parking position T becomes narrower. Therefore, for example, there may occur a case, such as a case in which the vehicle 50 is not movable from the current position to the target parking position T unless the curvature radius of the target movement path is reduced and the steering angle of the vehicle 50 is increased, or a case in which the accuracy of the parking position of the vehicle 50 is reduced.

Therefore, the vehicle control part 13 applies, in a case in which the movement space breadth B is determined to be narrower than the determination criterion by the breadth determination part 12, a narrow environment setting that is a control setting for a narrow environment to increase the positional accuracy of the vehicle 50 by allowing increased motion of the vehicle 50 in the parking control, as compared with a case in which the movement space breadth B is determined to be a breadth of the determination criterion or more. Note that the vehicle control part 13 applies, in the case in which the movement space breadth B is determined to be the breadth of the determination criterion or more by the breadth determination part 12, a normal environment setting that is a control setting for a broad environment.

The application of the narrow environment setting performed in the case in which the movement space breadth B is determined to be narrower than the determination criterion by the breadth determination part 12 includes at least one of: reducing a lower limit of an allowable distance between the vehicle 50 that is moving and an obstacle outside the parking space P and the travel space M, as compared with the case in which the movement space breadth B is determined to be the breadth of the determination criterion or more, in a phase of setting the target movement path; reducing an allowable lower limit of a movement distance obtained until at least one of switching between forward movement and backward movement of the vehicle 50 that is moving and a stop of the vehicle 50 that is moving is performed, as compared with the case in which the movement space breadth B is determined to be the breadth of the determination criterion or more, in the phase of setting the target movement path; reducing a lower limit of a curvature radius of the target movement path, as compared with the case in which the movement space breadth B is determined to be the breadth of the determination criterion or more, in the phase of setting the target movement path; increasing an upper limit of a change in the target speed, as compared with the case in which the movement space breadth B is determined to be the breadth of the determination criterion or more, in a phase of setting the target speed of the vehicle 50 at each position on the target movement path; and increasing an allowable upper limit of actual acceleration, actual deceleration, or an actual steering angle of the vehicle 50 as a result of the feedback control, as compared with the case in which the movement space breadth B is determined to be the breadth of the determination criterion or more, in a phase of performing the parking control. Other settings may be the same between the narrow environment setting and the normal environment setting.

Specifically, the fact that the movement space breadth B is narrower means that an area in which the vehicle 50 can move is narrow in at least one of the travel space M and the parking space P. That is, it means that an area that can be set as the target movement path is narrow. In particular, in a case in which a predetermined lower limit is set for the allowable distance between the vehicle 50 that is moving and the obstacle outside the parking space P and the travel space M, the area that can be set as the target movement path becomes narrower by the lower limit.

However, in the parking support system 100 of the present embodiment, in a case in which the vehicle control part 13 performs, in the case in which the movement space breadth B is determined to be narrower than the determination criterion by the breadth determination part 12, reducing the lower limit of the allowable distance between the vehicle 50 that is moving and an obstacle outside the parking space P and the travel space M, as compared with the case in which the movement space breadth B is determined to be the breadth of the determination criterion or more, in the phase of setting the target movement path, it is possible to obtain an advantage that the area that can be set as the target movement path increases by that reduction. For example, when the area that can be set as the target movement path increases, it is possible to obtain an advantage such as an advantage that a target movement path (that is, a target movement path with a large curvature radius) on which the vehicle 50 is caused to gently turn can be set.

FIGS. 5 and 6 are explanatory views showing examples of control settings in the phase of setting the target movement path. FIG. 5 shows an example of the normal environment setting, which is a control setting for a broad environment, and FIG. 6 shows an example of the narrow environment setting, which is a control setting for a narrow environment. As shown in the drawing, in the case of the normal environment setting, the lower limit of the allowable distance between the vehicle 50 that is moving and an obstacle (another vehicle in the example shown in the drawing) outside the parking space P and the travel space M is set to a distance L1, in the phase of setting the target movement path. On the other hand, in the case of the narrow environment setting, the lower limit of the allowable distance between the vehicle 50 that is moving and an obstacle (another vehicle in the example shown in the drawing) outside the parking space P and the travel space M is set to a distance L2, in the phase of setting the target movement path. Here, L1 > L2 is established. That is, the vehicle control part 13 performs, in the case in which the movement space breadth B is determined to be narrower than the determination criterion by the breadth determination part 12, reducing the lower limit of the allowable distance between the vehicle 50 that is moving and the obstacle (the other vehicle in the example shown in the drawing) outside the parking space P and the travel space M, in the phase of setting the target movement path.

Further, in a case in which the vehicle control part 13 performs, in the case in which the movement space breadth B is determined to be narrower than the determination criterion by the breadth determination part 12, reducing the allowable lower limit of the movement distance obtained until at least one of the switching between forward movement and backward movement of the vehicle 50 that is moving and the stop of the vehicle 50 that is moving is performed, as compared with the case in which the movement space breadth B is determined to be the breadth of the determination criterion or more, in the phase of setting the target movement path, it is possible to perform a setting of a target movement path through which the forward movement and the backward movement are allowed to be switched in a short distance, that is, in a narrow range.

Further, in a case in which the vehicle control part 13 performs, in the case in which the movement space breadth B is determined to be narrower than the determination criterion by the breadth determination part 12, reducing the lower limit of the curvature radius of the target movement path, as compared with the case in which the movement space breadth B is determined to be the breadth of the determination criterion or more, in the phase of setting the target movement path, it is possible to perform a setting of a target movement path through which the vehicle 50 is requested to move at a large steering angle.

Further, in a case in which the vehicle control part 13 performs, in the case in which the movement space breadth B is determined to be narrower than the determination criterion by the breadth determination part 12, increasing the upper limit of the change in the target speed, as compared with the case in which the movement space breadth B is determined to be the breadth of the determination criterion or more, in the phase of setting the target speed of the vehicle 50 at each position on the target movement path, it is possible to perform a setting of a target movement path through which repeated acceleration and deceleration (for example, a start of movement and a stop) are requested in a short distance.

Further, in a case in which the vehicle control part 13 performs, in the case in which the movement space breadth B is determined to be narrower than the determination criterion by the breadth determination part 12, increasing the allowable upper limit of the actual acceleration, the actual deceleration, or the actual steering angle of the vehicle 50 as a result of the feedback control, as compared with the case in which the movement space breadth B is determined to be the breadth of the determination criterion or more, in a phase of performing the parking control, a possibility that the vehicle 50 can be moved at the set target speed on the set target movement path is increased.

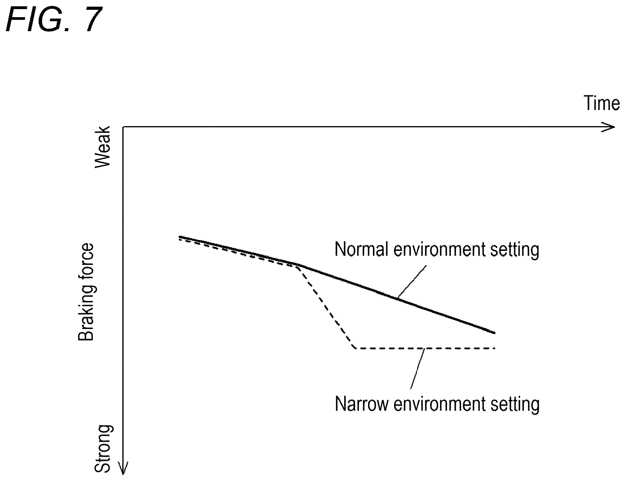

FIG. 7 is an explanatory diagram showing an example of control settings in the phase of performing the parking control. Note that FIG. 7 is a diagram showing temporal changes in the braking force of the vehicle 50 while the parking control is being performed. In the case of the narrow environment setting, the strength of the braking force sharply changes. That is, the deceleration of the vehicle 50 is large. In contrast, in the case of the normal environment setting, the change in the strength of the braking force is gentle. That is, the deceleration of the vehicle 50 is small. In this manner, in the case in which the allowable upper limit of the actual deceleration of the vehicle 50 is increased, the possibility that the vehicle 50 can be moved at the set target speed on the set target movement path is increased.

As described above, the parking support system 100 is a parking support system 100 that performs the control, on the vehicle 50, through which the vehicle 50 in the travel space M connected to the parking space P is parked into the parking space P, the parking support system 100 including: the space recognition part 11 that recognizes the travel space M and the parking space P; the breadth determination part 12 that determines at least one of the width B1 of the entrance E for the vehicle 50 from the travel space M to the parking space P and the length B2, of the travel space M, in the direction orthogonal to the width B1 of the entrance E, recognized by the space recognition part 11, as the movement space breadth B available for the movement path of the vehicle 50; and the vehicle control part 13 that performs the parking control through which the vehicle 50 is moved into and stopped in the parking space P, on the basis of the relative positions of the parking space P and the travel space M with respect to the vehicle 50. The vehicle control part 13 applies, in the case in which the movement space breadth B is determined to be narrower than the determination criterion by the breadth determination part 12, the narrow environment setting that is a control setting for a narrow environment to increase the positional accuracy of the vehicle 50 by allowing increased motion of the vehicle 50 in the parking control, as compared with the case in which the movement space breadth B is determined to be the breadth of the determination criterion or more by the breadth determination part 12.

As described above, the narrow environment setting is applied in a case in which the movement space breadth B available for the movement path of the vehicle 50 is narrower than the determination criterion, that is, in a case in which it is highly necessary to increase the accuracy of the position of the vehicle 50 under the parking control in order to avoid interference with an obstacle around the vehicle 50. As a result, in exchange for allowing the motion of the vehicle 50 in the parking control to increase, the positional accuracy of the vehicle 50 in the parking control can be increased, and the interference with the obstacle around the vehicle 50 can be appropriately avoided. Further, in the parking support system 100 of the present embodiment, in a case in which the movement space breadth B is the breadth of the determination criterion or more, there is no problem even if the position of the vehicle 50 under the parking control slightly deviates. Thus, in exchange for reducing the positional accuracy of the vehicle 50, an increase in the motion of the vehicle 50 can be suppressed, and the ride comfort of the occupant of the vehicle 50 can be improved. That is, in the parking support system 100 of the present embodiment, it is possible to perform parking control in which required accuracy of the parking position of the vehicle 50 is ensured in accordance with the movement space breadth B, and in which ride comfort of the occupant is also ensured as much as possible.

Further, as described above, in the present embodiment, the vehicle control part 13 is configured to set the target movement path that is the target for the movement path of the vehicle 50, and the target speed of the vehicle 50 at each position on the target movement path, on the basis of the relative positions of the parking space P and the travel space M with respect to the vehicle 50, and perform the feedback control to cause the actual position and the actual speed of the vehicle 50 to approach the target movement path and the target speed, in the parking control. Further, the application of the narrow environment setting includes at least one of: reducing the lower limit of the allowable distance between the vehicle 50 that is moving and the obstacle outside the parking space P and the travel space M, as compared with the case in which the movement space breadth B is determined to be the breadth of the determination criterion or more, in the phase of setting the target movement path; reducing the allowable lower limit of the movement distance obtained until at least one of switching between forward movement and backward movement of the vehicle 50 that is moving and the stop of the vehicle 50 that is moving is performed, as compared with the case in which the movement space breadth B is determined to be the breadth of the determination criterion or more, in the phase of setting the target movement path; reducing the lower limit of the curvature radius of the target movement path, as compared with the case in which the movement space breadth B is determined to be the breadth of the determination criterion or more, in the phase of setting the target movement path; increasing the upper limit of the change in the target speed, as compared with the case in which the movement space breadth B is determined to be the breadth of the determination criterion or more, in the phase of setting the target speed of the vehicle 50 at each position on the target movement path; and increasing the allowable upper limit of the actual acceleration, the actual deceleration, or the actual steering angle of the vehicle 50 as the result of the feedback control, as compared with the case in which the movement space breadth B is determined to be the breadth of the determination criterion or more, in the phase of performing the parking control.

According to such a parking support system 100 of the present embodiment, in a case in which the movement space breadth B is narrower than the determination criterion, at least one narrow environment setting described above is applied. That is, in the case in which the movement space breadth B is narrower than the determination criterion, the positional accuracy of the vehicle 50 can be increased by allowing the increased motion of the vehicle 50.

### [Second Embodiment]

A parking support system 100 of a second embodiment is different from that of the above embodiment in the content of the breadth determination processing. The parking support system 100 of the second embodiment will be described below, and the description of the configurations similar to those of the above embodiment will be omitted.

The breadth determination part 12 of the parking support system 100 sets a plurality of determination criteria, and determines to which one of a plurality of breadth levels each indicating that the movement space breadth B is narrower than any one of the plurality of determination criteria the movement space breadth B corresponds. For example, when the parking control through the parking support system 100 is performed, the breadth determination part 12 executes breadth determination processing of determining to which one of the plurality of breadth levels each indicating that the movement space breadth B is narrower than any one of the plurality of determination criteria the movement space breadth B corresponds, once, and maintains the determination of the breadth level until the parking control ends.

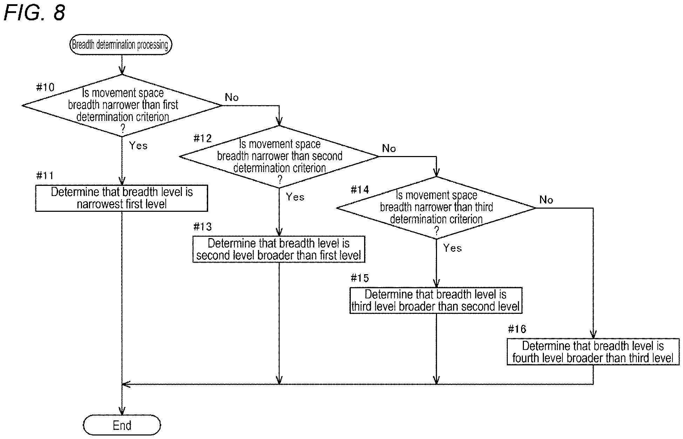

FIG. 8 is a flowchart for explaining breadth determination processing performed in the parking support system 100 of the second embodiment.

In step #10, the breadth determination part 12 determines whether or not the movement space breadth B is narrower than a first determination criterion. Then, in a case in which the movement space breadth B is narrower than the first determination criterion (in a case in which it is determined as "Yes" in step #10), the breadth determination part 12 proceeds to step #11, and determines that the breadth level is a first level that is the narrowest.

In a case in which the breadth determination part 12 determines that the movement space breadth B is a breadth of the first determination criterion or more in step #10 (in a case in which the breadth determination part 12 makes determination of "No" in step #10), the breadth determination part 12 proceeds to step #12. Then, in step #12, the breadth determination part 12 determines whether or not the movement space breadth B is narrower than a second determination criterion. Then, in a case in which the movement space breadth B is narrower than the second determination criterion (that is, in a case in which the movement space breadth B is a breadth of the first determination criterion or more, and is narrower than the second determination criterion), the breadth determination part 12 proceeds to step #13, and determines that the breadth level is a second level broader than the first level.

In a case in which the breadth determination part 12 determines that the movement space breadth B is a breadth of the second determination criterion or more in step #12, the breadth determination part 12 proceeds to step #14. Then, in step #14, the breadth determination part 12 determines whether or not the movement space breadth B is narrower than a third determination criterion. Then, in a case in which the movement space breadth B is narrower than the third determination criterion (that is, in a case in which the movement space breadth B is a breadth of the second determination criterion or more, and is narrower than the third determination criterion), the breadth determination part 12 proceeds to step #15, and determines that the breadth level is a third level broader than the second level.

In a case in which the breadth determination part 12 determines that the movement space breadth B is a breadth of the third determination criterion or more in step #14, the breadth determination part 12 proceeds to step #16. Then, in step #16, the breadth determination part 12 determines that the breadth level is a fourth level broader than the third level.

The vehicle control part 13 includes, as the narrow environment settings, settings, at a plurality of levels, having respective different setting contents corresponding to the breadth levels, and applies a narrow environment setting at a level corresponding to a breadth level determined by the breadth determination part 12. In the example shown in Table 1 below, the first level, the second level, and the third level correspond to the "plurality of breadth levels each indicating that the movement space breadth B is narrower than any one of the plurality of determination criteria". Note that the fourth level does not correspond to any of the "plurality of breadth levels each indicating that the movement space breadth B is narrower than any one of the plurality of determination criteria".

Then, the vehicle control part 13 applies a "narrow environment setting 1" in a case in which the breadth level is the first level, applies a "narrow environment setting 2" in a case in which the breadth level is the second level, and applies a "narrow environment setting 3" in a case in which the breadth level is the third level. Note that the vehicle control part 13 applies the "normal environment setting" in a case in which the breadth level is the fourth level.

**[Table 1]**

| Breadth level | Control setting |
|---|---|
| First level (narrowest) | Narrow environment setting 1 |
| Second level (broader than first level) | Narrow environment setting 2 |
| Third level (broader than second level) | Narrow environment setting 3 |
| Fourth level (broader than third level) | Normal environment setting |

For example, the narrow environment setting 1 applied in a case in which the movement space breadth B is the narrowest includes at least one of changes that are: further reducing the lower limit of the allowable distance between the vehicle 50 that is moving and the obstacle outside the parking space P and the travel space M, in the phase of setting the target movement path; further reducing the allowable lower limit of the movement distance obtained until at least one of switching between forward movement and backward movement of the vehicle 50 that is moving and the stop of the vehicle 50 that is moving is performed, as compared with the case in which the movement space breadth B is determined to be the breadth of the determination criterion or more, in the phase of setting the target movement path; further reducing the lower limit of the curvature radius of the target movement path, as compared with the case in which the movement space breadth B is determined to be the breadth of the determination criterion or more, in the phase of setting the target movement path; further increasing the upper limit of the change in the target speed, as compared with the case in which the movement space breadth B is determined to be the breadth of the determination criterion or more, in the phase of setting the target speed of the vehicle 50 at each position on the target movement path; and further increasing the allowable upper limit of the actual acceleration, the actual deceleration, or the actual steering angle of the vehicle 50 as the result of the feedback control, as compared with the case in which the movement space breadth B is determined to be the breadth of the determination criterion or more, in the phase of performing the parking control, as compared with the narrow environment settings 2, 3. Other settings may be the same between the narrow environment setting 1 and the narrow environment settings 2, 3.

In addition, the narrow environment setting 2 includes at least one of changes that are: further reducing the lower limit of the allowable distance between the vehicle 50 that is moving and the obstacle outside the parking space P and the travel space M, in the phase of setting the target movement path; further reducing the allowable lower limit of the movement distance obtained until at least one of switching between forward movement and backward movement of the vehicle 50 that is moving and the stop of the vehicle 50 that is moving is performed, as compared with the case in which the movement space breadth B is determined to be the breadth of the determination criterion or more, in the phase of setting the target movement path; further reducing the lower limit of the curvature radius of the target movement path, as compared with the case in which the movement space breadth B is determined to be the breadth of the determination criterion or more, in the phase of setting the target movement path; further increasing the upper limit of the change in the target speed, as compared with the case in which the movement space breadth B is determined to be the breadth of the determination criterion or more, in the phase of setting the target speed of the vehicle 50 at each position on the target movement path; and further increasing the allowable upper limit of the actual acceleration, the actual deceleration, or the actual steering angle of the vehicle 50 as the result of the feedback control, as compared with the case in which the movement space breadth B is determined to be the breadth of the determination criterion or more, in the phase of performing the parking control, as compared with the narrow environment setting 3. Other settings may be the same between the narrow environment setting 2 and the narrow environment setting 3.

As described above, in the present embodiment, the breadth determination part 12 sets the plurality of determination criteria, and determines to which one of the plurality of breadth levels each indicating that the movement space breadth B is narrower than any one of the plurality of determination criteria the movement space breadth B corresponds. Then, the vehicle control part 13 includes, as the narrow environment settings, settings, at the plurality of levels, having the respective different setting contents corresponding to the breadth levels, and applies a narrow environment setting at a level corresponding to a breadth level determined by the breadth determination part 12.

According to such a parking support system 100 of the present embodiment, the vehicle control part 13 applies, in a case in which applying the narrow environment setting in accordance with the fact that the movement space breadth B is narrower than any one of the plurality of determination criteria, a narrow environment setting at a level corresponding to a breadth level determined by the breadth determination part 12. Therefore, by performing the parking control in accordance with the movement space breadth B, the positional accuracy of the vehicle 50 can be ensured, and the ride comfort of the occupant can also be increased as much as possible.

### [Third Embodiment]

A parking support system 100 of a third embodiment is different from those of the above embodiments in that there is a case in which levels of the narrow environment setting to be applied are changed while the parking control is being performed by the vehicle control part 13. The parking support system 100 of the third embodiment will be described below, and the description of the configurations similar to those of the above embodiments will be omitted.

The space recognition part 11 is configured to repeatedly recognize the movement space breadth B, while the parking control is being performed. Then, the breadth determination part 12 is configured to repeatedly determine to which one of the plurality of breadth levels the movement space breadth B recognized by the space recognition part 11 corresponds, while the parking control is being performed by the vehicle control part 13. That is, the breadth determination part 12 repeatedly executes the breadth determination processing shown in FIG. 8, while the parking control is being performed by the vehicle control part 13.

Then, when the determination result made by the breadth determination part 12 is subjected to an update while the vehicle control part 13 is performing the parking control, the vehicle control part 13 changes the level of the narrow environment setting to be applied, in a case in which the update is an update in which the breadth level is determined to be a narrower one than that of the previous determination result, and the vehicle control part 13 does not change the level of the narrow environment setting to be applied, in a case in which the update is an update in which the breadth level is determined to be a broader one than that of the previous determination result.

As described above, when the determination result made by the breadth determination part 12 is updated while the vehicle control part 13 is performing the parking control, the vehicle control part 13 changes the level of the narrow environment setting to be applied (that is, changes it to a narrower one), in the case in which the update is an update in which the breadth level is determined to be narrower one than that of the previous determination result. As a result, it is possible to perform parking control in accordance with a breadth level of the movement space breadth B after the update.

Note that there is a possibility that the movement space breadth B recognized by the space recognition part 11 repeatedly varies with time. Moreover, accordingly, there is a possibility that the breadth level, of the movement space breadth B, determined by the breadth determination part 12 also repeatedly varies. In such a case, if the vehicle control part 13 alternately changes the level of the narrow environment setting to be applied, to a narrower side and a broader side in accordance with the repetition of the variations in the breadth level, of the movement space breadth B, determined by the breadth determination part 12, there may arise such a problem that the motion of the vehicle 50 becomes unstable while the parking control is being performed.

In the parking support system 100 of the present embodiment, when the determination result made by the breadth determination part 12 is updated while the vehicle control part 13 is performing the parking control, the vehicle control part 13 does not change the level of the narrow environment setting to be applied, in the case in which the update is an update in which the breadth level is determined to be broader one than that of the previous determination result. As a result, it is easy to stabilize the motion of the vehicle 50 made while the parking control is being performed.

### [Other Embodiments]

(1) In the above embodiments, in the parking support system 100, for the determination criterion for determining the movement space breadth B, a different value may be used in accordance with a dimension (for example, at least one of a width and a length, or the like) of the vehicle 50, or the same value may be used regardless of the dimension of the vehicle 50.
(2) In the above embodiments, the parking support system 100 may determine whether or not both the value of the width B1 of the entrance E for the vehicle 50 to the parking space P and the value of the length B2, of the travel space M, in the direction orthogonal to the width B1 of the entrance E are narrower than a predetermined determination criterion, as the movement space breadth B. In this case, the determination criterion may include a determination criterion for the value of the width B1 of the entrance E for the vehicle 50 to the parking space P and a determination criterion for the value of the length B2, of the travel space M, in the direction orthogonal to the width B1 of the entrance E. Moreover, in a case in which the value of the width B1 of the entrance E for the vehicle 50 to the parking space P is narrower than the determination criterion therefor and the value of the length B2, of the travel space M, in the direction orthogonal to the width B1 of the entrance E is narrower than the determination criterion therefor, the vehicle control part 13 may determine that the movement space breadth B is narrower than the determination criterion.

Alternatively, the vehicle control part 13 may perform both the determination as to whether or not the value of the width B1 of the entrance E for the vehicle 50 to the parking space P is narrower than the determination criterion therefor and the determination as to whether or not the value of the length B2, of the travel space M, in the direction orthogonal to the width B1 of the entrance E is narrower than the determination criterion therefor, and may determine that the movement space breadth B is narrower than the determination criterion in a case in which either one of a condition in which the value of the width B1 of the entrance E for the vehicle 50 to the parking space P is narrower than the determination criterion therefor and a condition in which the value of the length B2, of the travel space M, in the direction orthogonal to the width B1 of the entrance E is narrower than the determination criterion therefor is satisfied.

(3) In the above embodiments, the number of levels of the determination criterion for determining the movement space breadth B can be appropriately set. In addition, the number of narrow environment settings can be appropriately set in accordance with the number of levels of the determination criterion.

(4) In the above embodiments, it has been described that in the narrow environment setting, the increased motion of the vehicle 50 in the parking control is allowed in exchange for increasing the positional accuracy of the vehicle 50. However, the narrow environment setting need not necessarily allow the increased motion of the vehicle 50 in the parking control as long as the narrow environment setting is a control setting that can increase the positional accuracy of the vehicle 50. For example, the narrow environment setting may be control for increasing the positional accuracy of the vehicle 50 by allowing an increase in a time required for the parking control as compared with a case in which the movement space breadth B is determined to be a breadth of the determination criterion or more. With such a configuration, the moving speed of the vehicle 50 can be reduced in the parking control, and thus the positional accuracy of the vehicle 50 can be increased even if the increased motion of the vehicle 50 is not allowed.

(5) The configurations disclosed in the embodiments described above (including the above embodiments and the other embodiments; the similar applies to the following description) can be applied in combination with configurations disclosed in other embodiments as long as no contradiction arises. Also for other configurations, the embodiments disclosed herein are illustrative in all respects, and modification can be made as appropriate without departing from the gist of the present disclosure.

### [Outlines of Embodiments]

Outlines of the parking support system (100) described above will be described below.

A parking support system (100) is a parking support system (100) configured to perform control, on a vehicle (50), through which the vehicle (50) in a travel space (M) connected to a parking space (P) is parked into the parking space (P), the parking support system (100) including:
a space recognition part (11) configured to recognize the travel space (M) and the parking space (P);
a breadth determination part (12) configured to determine at least one of a width (B1) of an entrance (E) for the vehicle (50) from the travel space (M) to the parking space (P) and a length (B2), of the travel space (M), in a direction orthogonal to the width (B1) of the entrance (E), recognized by the space recognition part (11), as a movement space breadth (B) available for a movement path of the vehicle (50); and
a vehicle control part (13) configured to perform parking control through which the vehicle (50) is moved into and stopped in the parking space (P), based on relative positions of the parking space (P) and the travel space (M) with respect to the vehicle (50),
in which
the vehicle control part (13) is configured to apply, in a case in which the movement space breadth (B) is determined to be narrower than a determination criterion by the breadth determination part (12), a narrow environment setting that is a control setting for a narrow environment to increase positional accuracy of the vehicle (50), as compared with a case in which the movement space breadth (B) is determined to be a breadth of the determination criterion or more by the breadth determination part (12).

According to this configuration, the narrow environment setting is applied in a case in which the movement space breadth (B) available for the movement path of the vehicle (50) is narrower than the determination criterion, that is, in a case in which it is highly necessary to increase the accuracy of the position of the vehicle (50) under the parking control in order to avoid interference with an obstacle around the vehicle (50). As a result, the positional accuracy of the vehicle (50) in the parking control can be increased, and the interference with the obstacle around the vehicle (50) can be appropriately avoided. Further, in the parking support system (100) of the present embodiment, in a case in which the movement space breadth (B) is the breadth of the determination criterion or more, there is no problem even if the position of the vehicle (50) under the parking control slightly deviates. Thus, in exchange for reducing the positional accuracy of the vehicle (50), an increase in the motion of the vehicle (50) can be suppressed, and the ride comfort of the occupant of the vehicle (50) can be improved. That is, in the parking support system (100) of the present embodiment, it is possible to perform parking control in which required accuracy of the parking position of the vehicle (50) is ensured in accordance with the movement space breadth (B), and in which ride comfort of the occupant is also ensured as much as possible.

Here, the vehicle control part (13) is preferably configured to set a target movement path that is a target for a movement path of the vehicle (50), and a target speed of the vehicle (50) at each position on the target movement path, based on the relative positions of the parking space (P) and the travel space (M) with respect to the vehicle (50), and perform feedback control to cause an actual position and an actual speed of the vehicle (50) to approach the target movement path and the target speed, in the parking control, and
to apply the narrow environment setting preferably includes at least one of to:
reduce a lower limit of an allowable distance between the vehicle (50) that is moving and an obstacle outside the parking space (P) and the travel space (M), as compared with a case in which the movement space breadth (B) is determined to be the breadth of the determination criterion or more, in a phase of setting the target movement path;
reduce an allowable lower limit of a movement distance obtained until at least one of switching between forward movement and backward movement of the vehicle (50) that is moving and a stop of the vehicle (50) that is moving is performed, as compared with a case in which the movement space breadth (B) is determined to be the breadth of the determination criterion or more, in the phase of setting the target movement path;
reduce a lower limit of a curvature radius of the target movement path, as compared with a case in which the movement space breadth (B) is determined to be the breadth of the determination criterion or more, in the phase of setting the target movement path;
increase an upper limit of a change in the target speed, as compared with a case in which the movement space breadth (B) is determined to be the breadth of the determination criterion or more, in a phase of setting the target speed of the vehicle (50) at each position on the target movement path; and
increase an allowable upper limit of actual acceleration, actual deceleration, or an actual steering angle of the vehicle (50) as a result of the feedback control, as compared with a case in which the movement space breadth (B) is determined to be the breadth of the determination criterion or more, in a phase of performing the parking control.

According to this configuration, in a case in which the movement space breadth (B) is narrower than the determination criterion, at least one narrow environment setting described above is applied. That is, in the case in which the movement space breadth (B) is narrower than the determination criterion, the positional accuracy of the vehicle (50) can be increased by allowing the increased motion of the vehicle (50).

Further, the breadth determination part (12) is preferably configured to set a plurality of the determination criteria, and determine to which one of a plurality of breadth levels each indicating that the movement space breadth is narrower than any one of the plurality of the determination criteria the movement space breadth corresponds, and
the vehicle control part (13) preferably includes, as a plurality of the narrow environment settings, settings, at a plurality of levels, having respective different setting contents corresponding to the plurality of breadth levels, and is preferably configured to apply one of the plurality of the narrow environment settings at one of the plurality of levels corresponding to one of the plurality of breadth levels determined by the breadth determination part (12).

According to this configuration, the vehicle control part (13) applies, in a case in which applying the narrow environment setting in accordance with the fact that the movement space breadth (B) is narrower than any one of the plurality of determination criteria, a narrow environment setting at a level corresponding to a breadth level determined by the breadth determination part (12). Therefore, by performing the parking control in accordance with the movement space breadth (B), the positional accuracy of the vehicle (50) can be ensured, and the ride comfort of the occupant can also be increased as much as possible.

Further, the space recognition part (11) is preferably configured to repeatedly recognize the movement space breadth (B), while the parking control is being performed,
the breadth determination part (12) is preferably configured to repeatedly determine to which one of the plurality of breadth levels the movement space breadth (B) corresponds, while the parking control is being performed by the vehicle control part (13), and
when determination result made by the breadth determination part (12) is subjected to an update while the vehicle control part (13) is performing the parking control, preferably, the vehicle control part (13) is configured to change a level of the narrow environment setting to be applied, in a case in which the update is an update in which the breadth level is determined to be a narrower breadth level than a breadth level of a previous determination result, and the vehicle control part (13) is configured not to change a level of the narrow environment setting to be applied, in a case in which the update is an update in which the breadth level is determined to be a broader breadth level than a breadth level of a previous determination result.

According to this configuration, when the determination result made by the breadth determination part (12) is updated while the vehicle control part (13) is performing the parking control, the vehicle control part (13) changes the level of the narrow environment setting to be applied (that is, changes it to a narrower one), in the case in which the update is an update in which the breadth level is determined to be narrower one than that of the previous determination result. As a result, it is possible to perform parking control in accordance with a breadth level of the movement space breadth (B) after the update. Note that there is a possibility that the movement space breadth (B) recognized by the space recognition part (11) repeatedly varies with time. Moreover, accordingly, there is a possibility that the breadth level, of the movement space breadth (B), determined by the breadth determination part (12) also repeatedly varies. In such a case, if the vehicle control part (13) alternately changes the level of the narrow environment setting to be applied, to a narrower side and a broader side in accordance with the repetition of the variations in the breadth level, of the movement space breadth (B), determined by the breadth determination part (12), there may arise such a problem that the motion of the vehicle (50) becomes unstable while the parking control is being performed. In the parking support system (100) of the present embodiment, when the determination result made by the breadth determination part (12) is updated while the vehicle control part (13) is performing the parking control, the vehicle control part (13) does not change the level of the narrow environment setting to be applied, in the case in which the update is an update in which the breadth level is determined to be broader one than that of the previous determination result. As a result, it is easy to stabilize the motion of the vehicle (50) made while the parking control is being performed.

### REFERENCE SIGNS LIST

11: Space recognition part, 12: Breadth determination part, 13: Vehicle control part, 47: Space recognition part, 50: Vehicle, 100: Parking support system, B: Movement space breadth, E: Entrance, M: Travel space, and P: Parking space

## Claims

1. A parking support system configured to perform control, on a vehicle, through which the vehicle in a travel space connected to a parking space is parked into the parking space, the parking support system comprising:
a space recognition part configured to recognize the travel space and the parking space;
a breadth determination part configured to determine at least one of a width of an entrance for the vehicle from the travel space to the parking space and a length, of the travel space, in a direction orthogonal to the width of the entrance, recognized by the space recognition part, as a movement space breadth available for a movement path of the vehicle; and
a vehicle control part configured to perform parking control through which the vehicle is moved into and stopped in the parking space, based on relative positions of the parking space and the travel space with respect to the vehicle,
wherein
the vehicle control part is configured to apply, in a case in which the movement space breadth is determined to be narrower than a determination criterion by the breadth determination part, a narrow environment setting that is a control setting for a narrow environment to increase positional accuracy of the vehicle, as compared with a case in which the movement space breadth is determined to be a breadth of the determination criterion or more by the breadth determination part.

2. The parking support system according to claim 1, wherein
the vehicle control part is configured to set a target movement path that is a target for a movement path of the vehicle, and a target speed of the vehicle at each position on the target movement path, based on the relative positions of the parking space and the travel space with respect to the vehicle, and perform feedback control to cause an actual position and an actual speed of the vehicle to approach the target movement path and the target speed, in the parking control, and
to apply the narrow environment setting includes at least one of to:
reduce a lower limit of an allowable distance between the vehicle that is moving and an obstacle outside the parking space and the travel space, as compared with a case in which the movement space breadth is determined to be the breadth of the determination criterion or more, in a phase of setting the target movement path;
reduce an allowable lower limit of a movement distance obtained until at least one of switching between forward movement and backward movement of the vehicle that is moving and a stop of the vehicle that is moving is performed, as compared with a case in which the movement space breadth is determined to be the breadth of the determination criterion or more, in the phase of setting the target movement path;
reduce a lower limit of a curvature radius of the target movement path, as compared with a case in which the movement space breadth is determined to be the breadth of the determination criterion or more, in the phase of setting the target movement path;
increase an upper limit of a change in the target speed, as compared with a case in which the movement space breadth is determined to be the breadth of the determination criterion or more, in a phase of setting the target speed of the vehicle at each position on the target movement path; and
increase an allowable upper limit of actual acceleration, actual deceleration, or an actual steering angle of the vehicle as a result of the feedback control, as compared with a case in which the movement space breadth is determined to be the breadth of the determination criterion or more, in a phase of performing the parking control.

3. The parking support system according to claim 1 or 2, wherein
the breadth determination part is configured to set a plurality of the determination criteria, and determine to which one of a plurality of breadth levels each indicating that the movement space breadth is narrower than any one of the plurality of the determination criteria the movement space breadth corresponds, and
the vehicle control part includes, as a plurality of the narrow environment settings, settings, at a plurality of levels, having respective different setting contents corresponding to the plurality of breadth levels, and is configured to apply one of the plurality of the narrow environment settings at one of the plurality of levels corresponding to one of the plurality of breadth levels determined by the breadth determination part.

4. The parking support system according to claim 3, wherein
the space recognition part is configured to repeatedly recognize the movement space breadth, while the parking control is being performed,
the breadth determination part is configured to repeatedly determine to which one of the plurality of breadth levels the movement space breadth corresponds, while the parking control is being performed by the vehicle control part, and
when determination result made by the breadth determination part is subjected to an update while the vehicle control part is performing the parking control, the vehicle control part is configured to change a level of the narrow environment setting to be applied, in a case in which the update is an update in which the breadth level is determined to be a narrower breadth level than a breadth level of a previous determination result, and the vehicle control part is configured not to change a level of the narrow environment setting to be applied, in a case in which the update is an update in which the breadth level is determined to be a broader breadth level than a breadth level of a previous determination result.
